# EUROPÄISCHE PATENTSCHRIFT

(11) **EP 3 324 039 B1**
(45) Veröffentlichungstag und Bekanntmachung des Hinweises auf die Patenterteilung: **06.11.2019**
(21) Anmeldenummer: 17191512.7
(22) Anmeldetag: 18.09.2017
(51) Int. Cl.: F03D 1/06, F03D 80/00

(54) **ROTORBLATTVERSTELLUNG**
ROTOR BLADE ADJUSTMENT
RÉGLAGE DU PAS DE PALE

(30) Priorität: 18.11.2016 DE 102016222744
(43) Veröffentlichungstag der Anmeldung: 23.05.2018
(73) Patentinhaber: ContiTech Antriebssysteme GmbH, 30165 Hannover (DE)
(72) Erfinder: Göser, Hubert, 29451 Dannenberg (DE); Kucharczyk, Andre, 29499 Gülden (DE)
(74) Vertreter: Kilsch, Armin Ralph

(56) Entgegenhaltungen:
- DE-A1-102008 013 926
- DE-A1-102013 206 878

## Beschreibung

Die Erfindung betrifft eine Einrichtung zur Rotorblattverstellung an einer Windkraftanlage, bei der die Verstellung eines drehbar gelagerten Rotorblattes über einen Zugriementrieb erfolgt, bei dem ein Zugriemen mindestens eine mit einem Antriebsmotor verbundene Antriebsscheibe und den Fuß bzw. Schaft des Rotorblattes jeweils mindestens teilweise so umschlingt, dass ein zur Verstellung des Rotorblattes erforderliches Drehmoment vom Antriebsmotor auf den Schaft übertragbar ist.

Die Erzeugung von elektrischer Energie durch Windkraftanlagen ist dann besonders effektiv, wenn die Windkraftanlage bzw. der Generator im Bereich ihrer Nennleistung arbeiten kann. Bei unterschiedlichen Windgeschwindigkeiten ist dies dann effizient und materialschonend für die gesamte Anlage, wenn die Drehzahl des Rotors trotz schwankender Windstärken annähernd konstant gehalten wird. Die exakte Leistungsregelung ist daher für den gleichmäßigen Lauf des Generators besonders wichtig. Eine Regelung der Leistungsaufnahme geschieht heute in aller Regel durch Verdrehen der Rotorblätter. Die Rotorblätter werden durch einen Blattverstellantrieb, die so genannte Rotorblattverstellung, in unterschiedliche Positionen in Relation zur Anströmung durch den Wind gebracht.

Bei schwachem Wind werden die Rotorblätter etwa so eingestellt, dass das Rotorblattprofil mit einem großen Anstellwinkel, d.h. mit nahezu voller Breite gegen die Strömung steht. Bei auffrischendem Wind wird dann der Anstellwinkel zunehmend reduziert, bis bei Sturm die Blätter parallel zur Windströmung gerichtet werden (Fahnenstellung) und der Rotor im Extremfall stoppt und sich nicht mehr dreht. Die Rotorblattverstellung ist daher eines der wichtigsten Regelsysteme einer modernen Windenergieanlage. Die Regelung der Verstellung wird auch als "Pitch-Regelung" bezeichnet. Für den Verstellmechanismus als solchen existieren unterschiedliche elektrische und hydraulische Systeme, nämlich elektromechanische Verstelleinrichtungen mit Zahnradantrieben/Stirnradgetrieben, hydraulische Verstelleinrichtungen mit Zylinder, oft für jedes einzelne Rotorblatt, ebenso wie die bei der hier vorliegenden Erfindung betroffene Verstelleinrichtung der Rotorblätter über einen Zugmittelantrieb.

Abhängig von den einzelnen Systemen ist eine Blattverstellung um bis zu 180 Grad um die senkrecht zur Drehachse gelegene Rotorlängsachse möglich, wodurch die Rotorblätter in einem Bereich verschwenkt werden können, der von ihrer Maximalleistung bis zur "Fahnenstellung" oder Bremsung reicht.

Die heute zur Verstellung noch dominierenden Stirnradlösungen erfordern einen relativ hohen Wartungsaufwand, da u.a. der Schmierfilm im Zahneingriff erhalten werden muss, d.h. dass in regelmäßigen Abständen nachgefettet werden muss.

Diesen Nachteil vermeidet eine Verstelleinrichtung der Rotorblätter über einen als Zahnriementrieb ausgebildeten Zugmittelantrieb. Bei einer solchen Verstelleinrichtung läuft ein Zahnriemen kämmend über eine mit einem Antriebsmotor verbundene Antriebsscheibe und weiter über einen am Fuße des Rotorblattes angebrachten Zahnkranz. Durch die über den Zahnriemen am Zahnkranzumfang angreifende Radialkraft kann dann das Rotorblatt stufenlos in beliebiger Weise verdreht werden.

Die DE 42 21 783 A1 offenbart eine Vorrichtung zur Verstellung von Rotorblättern, bei dem ein zusätzliches zur aerodynamischen Abbremsung des Rotors wirkendes Bremssystem vorgesehen ist, welches bei Ausfall oder Störung des Blattverstellmechanismus eine zusätzliche Bremsvorrichtung bereitstellt. Dies wird erreicht durch ein an der Nabe befestigtes Verteilergetriebe, das eine Zentralrad enthält, das mit einer Bremsscheibe verbunden ist. Das Zentralrad kann mittels einer nicht mit der Rotornabe drehenden Bremszange festgebremst werden, so dass die Rotorblätter im Störfall sicher in die Fahnenstellung geschwenkt werden. Unter anderem ist hierzu auch eine getriebeausgangsseitige Verstellung der Rotorblätter mit einem Zugmitteltrieb/Zahnriementrieb offenbart.

Die DE 10 2008 013 926 A1 offenbart eine Vorrichtung zur Verstellung des Anstellwinkel eines Rotorblattes einer Windenergieanlage mit einem als Zahnriemen oder auch als Kette ausgebildeten so genannten Hülltriebstrang. In der Ausbildung als Zahnriemen umgreift der Hülltriebstrang ein mit einer Außenverzahnung versehenes Antriebsrad und einen mit einer Außenverzahnung versehenen Drehlagerring am nabenseitigen Ende des Rotorblattes.

Da die Leistung von Windkraftanlagen immer höher wird, kommen die an sich sehr gut für diese Aufgaben geeigneten Verstelleinrichtungen mit Zahnriemen langsam an ihre Grenzen. Sowohl die hohe Zahnbelastung/Zahnfußbelastung als auch die Zugbelastung, die durch die erforderliche Vorspannung noch verstärkt wird, sind nur noch mit überdimensionalen Breiten der Zahnriemen zu realisieren. Auch die durch die üblichen rückenseitig anliegenden Spannrollen entstehende Gegenbiegung in den Zahnriemen erhöht deren Belastung.

Auch wenn, wie z.B. in der DE 10 2008 013 926 A1 ebenfalls offenbart, zur Übertragung großer Kräfte der Hülltriebstrang auch aus mehreren zueinander parallelen Riemen bestehen kann oder Verstärkungsmaterialien aus Carbon vorgesehen sind, ist eine allein Materialverstärkung oder Vervielfältigung enthaltende Lösung nicht immer zufriedenstellend.

Die DE 10 2013 206 878 A1 offenbart eine Vorrichtung zur Verstellung eines Rotorblattes einer Windturbine, wobei die Vorrichtung innerhalb der Nabe angeordnet ist. Die Verstellung erfolgt auch dort über einen Riementrieb. Eine der dort offenbarten Ausführungsformen zeigt zwei Riemen, die jeweils mit einem ihrer Enden an einem mit dem Schaft des Rotorblatts verbundenen Antriebsflansch befestigt sind und deren anderes Ende durch einen Antrieb aufgewickelt wird. Bei hohen zu übertragenden Kräfte ist jedoch die Anbindung bzw. die Befestigung am Antriebsflansch bzw. am Schaft des Rotorblattes nicht ganz unproblematisch. Auch ist dort eine Lösung offenbart, bei der mehrere, d.h. mindestens zwei Riemen über einen Flaschenzug geführt werden und an feststehenden Teilen der Nabe mit ihren Enden befestigt sind. Dadurch ergibt sich jedoch eine recht komplizierte Bauform. Im Übrigen sind bei einer innerhalb der Nabe angeordneten Verstellung eines Rotorblattes die sich ergebenden Hebelverhältnissse ungünstiger, wodurch die aufzuwendenden Kräfte bzw. die Zugkräfte auf Riementriebe sehr hoch werden können.

Für die Erfindung bestand also die Aufgabe, ein System bzw. eine Einrichtung zur Rotorblattverstellung an Windkraftanlagen bereitzustellen, die innerhalb des zur Verfügung stehenden Bauraums große Stellkräfte mit Zugmitteltrieben übertragen bzw. auch bei großen Stellkräfte die Zugkräfte innerhalb der Zugmittelantriebe reduzieren kann, so dass eine hohe Lebensdauer der Riemen erreicht wird.

Gelöst wird diese Aufgabe durch die Merkmale des Hauptanspruchs. Weitere vorteilhafte Ausbildungen sind in den Unteransprüchen offenbart.

Dabei ist der Zugriemen zwischen dem Umschlingungsbereich an der Antriebsscheibe und dem Umschlingungsbereich am Fuß bzw. Schaft des Rotorblattes in Form eines Flaschenzugs über Flaschenzugsrollen geführt, wobei der Zugriemens mit seiner einen Seite an der Antriebsscheibe anliegt und letztere umschlingt und mit seiner anderen, gegenüberliegenden Seite am Fuß bzw. Schaft des Rotorblattes anliegt und letzteres über einen Teilbereich bzw. Umschlingungsbereich umschlingt. Relativ und je nach Sichtweise liegt also der Riemen mit seiner Vorderseite an der Antriebsscheibe an und rückseitig am Fuß bzw. Schaft des Rotorblattes. Zusammen mit den Flaschenzug rollen lässt sich hier also ein endloser Zugriemen einsetzen.

Durch die Ausbildung eines solchen Flaschenzugs innerhalb des Riementriebs lassen sich sehr hohe, nämlich bei einer Flasche mit einer Rolle doppelte Zugkräfte mit dem Riemen übertragen, so dass steigende Drehmomente bei der Rotorblattverstellung kein Problem mehr darstellen. Umgekehrt lässt sich bei einer Auslegung auf vorbestimmte Zugkräfte auch die Riemenbreit und damit die Baubreite halbieren. Die üblicherweise bei den Zahnriemen aus dem Stand der Technik kritischen Zahnfußspannungen/Zahnbelastungen spielen keine große Rolle mehr. Auch die für Zahnriemen typische hohe Vorspannung ist nicht mehr so relevant für die Zugkraft, die für die Übertragung des Drehmoments nötig ist.

Der Fuß bzw. Schaft des Rotorblattes kann hierzu in einem axialen Teilbereich besonders zur Aufnahme des Zugriemens/Riementrums ausgebildet sein, beispielsweise durch eine entsprechenden Oberflächenausbildung oder -profilierung oder auch durch Führungsscheiben, Flansche oder Wellenabsätze.

Eine weitere vorteilhafte Ausbildung besteht darin, dass die mindestens eine Flaschenzugrolle am Fuß bzw. Schaft des Rotorblattes gelagert ist, also auf dem verstellbaren oder drehbaren Teil des Rotorblattes. Die Flaschenzugrolle und deren Lagerung "dreht mit" und bildet so eine sehr klein bauende Konstruktion, die einfach innerhalb der Nabe platziert werden kann.

Eine weitere vorteilhafte Ausbildung zur Verbesserung der Positioniergenauigkeit bei gleichzeitig hoher übertragbarer Kraft besteht darin, dass der Zugriemen mit einer einseitigen oder beidseitigen Zahnung (Doppelverzahnung) versehen ist. Dabei sind natürlich die Antriebsscheibe außen und auch der Aufnahmebereich am Rotorschaft ebenfalls mit einer zum Zahnriemen komplementären Verzahnung versehen.

Eine weitere vorteilhafte Ausbildung zur Verringerung der Baugröße bei nahezu gleich bleibender übertragbarer Kraft besteht darin, dass der Zugriemen als Flachriemen oder als mindestens einseitig profilierter Flachriemen ausgebildet ist, wobei der Zugriemens den Fuß bzw. Schaft des Rotorblattes reibschlüssig umschlingt. Bei einer solchen Lösung entfallen auch umfangreiche Bearbeitungen von Antriebsscheiben oder Umschlingungsbereich durch etwaige Verzahnung und Profilierung. Unter einer üblichen Vorspannung und einem Umschlingungswinkel von in der Regel größer als 100° ergibt sich eine ausreichende Normal- und Reibkraft und somit ohne die Notwendigkeit zusätzlicher Spannrollen ein ausreichender Reibschluss, der für den Antrieb der meisten Rotorblattverstellungen völlig ausreicht.

Eine weitere vorteilhafte Ausbildung besteht darin, dass der Zugriemen als Endlosriemen ausgebildet ist. Da natürlich die Herstellungslänge von Endlosriemen je nach Herstellungsverfahren begrenzt ist, ist eine solche Ausbildung eher bei kleineren Windradanlagen möglich, weist aber dann die nachfolgend beschriebenen Vorteile auf. Durch die Verwendung eines solchen Endlosriemens kann man nämlich auf die bei Einzelzugriemen aus dem Stand der Technik üblicherweise nötigen Klemmungen zur mechanischen Verbindung mit dem Schaft grundsätzlich verzichten. Damit besteht auch nicht mehr die Gefahr, dass sich bei übergroßen Zugkräften im Zugmittel vorhandene Verstärkungselemente durch Scherkräften lösen oder von der vom Grundkörper trennen könnten. Durch Anwendung des erfindungsgemäßen Prinzips der Flaschenzugführung und wechselseitigen Anlage an Antriebsscheibe und Abtriebsscheibe (Schaft des Rotors) auf Endlosriemen sowie durch die sich ergebenden relativ großen Umschlingungswinkel lassen sich große Kräfte übertragen bei gleichzeitig langer Lebensdauer des Riemens.

Damit es je nach erforderlichem Dreh-oder Schwenkwinkel des Rotorblattes bei der erfindungsgemäßen Flaschenzug-Lösung nicht vorkommen kann, dass die eine Flaschenzugsrolle umlaufenden und damit im Flaschenzug gegenläufigen Teile, also die in eine Rolle einlaufende und aus derselben Rolle oder einer andern Rolle auslaufende Teile des endlosen Zugriementrums sich einander nähern und sich letztlich berühren, was natürlich zur Reibung und damit auch zu einem gewissen Verschleiß führen könnte, besteht eine weitere vorteilhafte Ausbildung darin, bei der die eine Flaschenzugsrolle umlaufenden im Flaschenzug gegenläufigen Teile des Zugriementrums durch Abstandshalter getrennt werden, vorzugweise durch Gleitschienen oder Rollen, an denen die gegenüber liegenden Seiten des Zugriementrums gegenläufig bewegbar gleitend oder abrollend anliegen.

In einer weiteren vorteilhafte Ausbildung ist der Zugriemen mindestens einseitig mit einer gleitfähigen Auflage versehen, insbesondere so ausgebildet, dass der Zugriemen einseitig eine Gewebelage als gleitfähige Auflage aufweist, vorzugsweise eine mit einer Polyethylenfolie beschichtete Gewebelage. Das beeinflusst die Reibungs- und Eingriffsverhältnisse in der Umschlingung günstig und vermeidet Erwärmung durch zu starke Reibung.

In besonderen Fällen und als zusätzliche Sicherheit besteht eine weitere vorteilhafte Ausbildung darin, dass der Trum des Zugriemens vorzugsweise in seinem mittleren Bereich der jeweiligen Umschlingung am Fuß bzw. Schaft des Rotorblattes zusätzlich form- und/oder reibschlüssig befestigt ist. Dies kann z. B. durch eine Klemmung geschehen oder auch durch einen Mitnehmer. Mit einer solchen Befestigung lässt sich auch evtl. auftretender Schlupf der Zugriemen sicher vermeiden.

Bei der erfindungsgemäßen Einrichtung kommt es natürlich besonders auch auf das Zugmittel an, was in besonderer Weise zur Verwendung in diesem Riementrieb zur Rotorblattverstellung angepasst werden muss. Insofern ist es vorteilhaft, wenn der Zugriemen aus im Wesentlichen aus einem elastomeren Material, vorzugsweise aus Polyurethan ausgebildet ist und als Zugträger Corde aufweist, deren Corddurchmesser b im Verhältnis zum Kerndurchmesser D der kleinsten im Zugriementrieb vorhandenen Umlenkrolle, Abstandsrolle, Antriebswelle oder -scheibe der Ungleichung D ≥ 40 b genügt.

Als Kerndurchmesser einer Antriebswelle oder -scheibe wird hier der Durchmesser bezeichnet, der die erste Wicklung des Zugmittels/Zugriemens aufnimmt, also der Außendurchmessser des Wellengrundes der Welle bzw. des Scheibengrundes einer Scheibe, ohne Berücksichtigung etwaiger Führungs- oder Bordscheiben. Sinngemäß gilt dasselbe für eine Umlenkrolle, natürlich ohne dass hier eine Wicklung erfolgt. Unter Berücksichtigung der oben genannten Ungleichung ergibt sich für den Zugriemen auch bei hoher Belastung bzw. einem hohen Lastkollektiv eine ausreichend hohe Lebensdauer, so dass diesbezüglich lange Wartungsintervalle möglich sind.

Diese Maßgabe gilt für die Antriebsscheibe bzw. -welle natürlich auch dann, wenn deren Mindestdurchmesser / Kerndurchmesser zwar etwas kleiner ausgebildet, aber immer eine oder einige Windungen des Zugmittels permanent auf der Scheibe aufgelegt bleiben und nicht mehr abgewickelt werden. Diese untersten Windungen oder Wicklungen sind sozusagen als Grundwindungen immer vorhanden und vergrößern den im Betrieb wirksamen Kerndurchmesser D.

Die Zugträger sollten dabei möglichst als Corde aus Stahl und als Litzenkonstruktion ausgebildet sein und die Zwischenräume der Litzenkonstruktion zu mindestens 60%, vorzugsweise zu mindestens 80% mit elastomerem Material ausgefüllt sein.

Anhand eines Ausführungsbeispiels soll die Erfindung näher erläutert werden. Es zeigen
- Fig. 1: prinzipiell eine Windkraftanlage mit verstellbaren Rotoren
- Fig. 2: die erfindungsgemäße Einrichtung zur Rotorblattverstellung einer Windkraftanlage als Prinzipskizze
- Fig. 3: eine Einrichtung zur Rotorblattverstellung aus dem Stand der Technik als Prinzipskizze

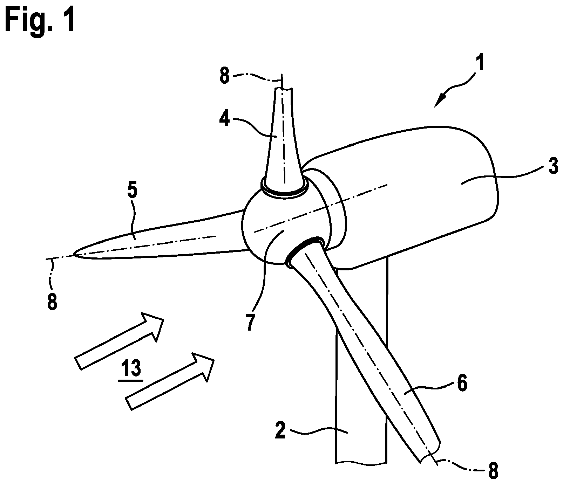

Fig. 1 zeigt prinzipiell eine Windkraftanlage 1 mit einem auf einem Turm 2 befestigten Generatorgehäuse 3. Die Windkraftanlage weist einen dreiblättrigen Rotor auf mit den Blättern 4, 5 und 6, die in der Nabe 7 gelagert und alle in ihrer Anstellung zum anströmenden Wind 13 verstellbar sind, d.h. um ihre Längsachsen 8 drehbar ausgebildet und dadurch mit einer Rotorblattverstellung ausgerüstet sind.

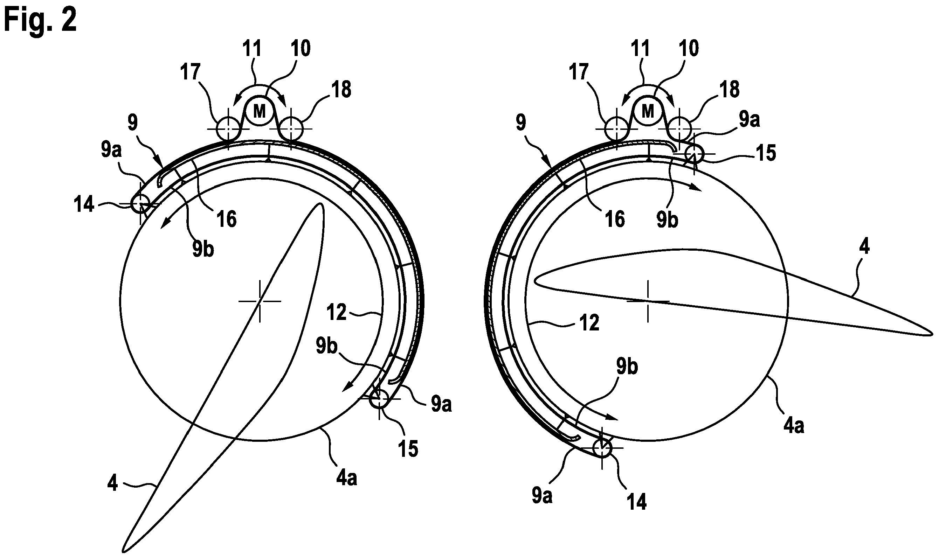

Fig, 2 zeigt als Prinzipskizze die erfindungsgemäße Einrichtung zur Rotorblattverstellung beispielsweise am Rotorblatt 4 dieser Windkraftanlage in Richtung der Blattlängsachse 8 gesehen, wobei das Rotorblatt 4 im linken und rechten Teil der Fig. 2 in zwei verschiedenen Stellungen dargestellt ist. Die Verstellung des drehbar gelagerten Rotorblattes 4 erfolgt über einen Zugriementrieb, bei dem ein Zugriemen 9 den Fuß bzw.

Schaft des Rotorblattes 4a auf einem Teilumfang so umschlingt, dass ein zur Verstellung des Rotorblattes erforderliches Drehmoment auf den Schaft übertragbar ist.

Der Zugriemen ist zwischen dem Umschlingungsbereich 11 an der mit einem Motor M verbundenen Antriebsscheibe 10 und dem Umschlingungsbereich 12 am Fuß bzw. Schaft des Rotorblattes in Form eines Flaschenzugs über Flaschenzugsrollen 14 und 15 geführt, wobei der Zugriemens mit seiner einen Seite an der Antriebsscheibe anliegt und letztere im Bereich 11 umschlingt. Mit seiner anderen, gegenüberliegenden Seite bzw. Rückseite liegt der Zugriemen am Fuß bzw. Schaft des Rotorblattes an und umschlingt letzteres über einen Teilbereich bzw. Umschlingungsbereich 12.

Der Zugriemen ist hier als doppelseitiger Endloszahnriemen ausgebildet, wobei die Verzahnung im Einzelnen hier jedoch nicht näher dargestellt ist. Antriebsscheibe 10 und der entsprechende Schaftumfang sind natürlich mit jeweils komplementären Außenverzahnungen versehen.

Dabei werden die jeweils eine Flaschenzugsrolle umlaufenden und im Flaschenzug gegenläufigen Teile 9a, 9b des Zugriemens 9 durch eine Gleitschiene 16 als Abstandshalter getrennt.

Der Zugriementrieb weist zusätzliche Umlenk- und Spannrollen 17 und 18 auf, durch die der Zugriemen 9 sicher an den Abstandshalter 16 angelegt und ausreichend gespannt wird.

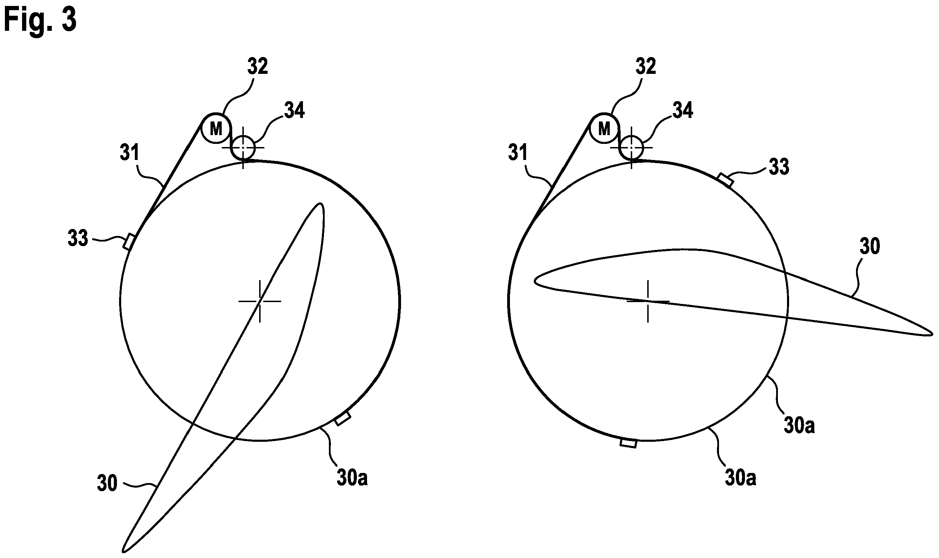

Zum Schluss und zum Vergleich zeigt Fig. 3 prinzipiell eine herkömmliche Rotorblattverstellung aus dem Stand der Technik. Die Verstellung des drehbar gelagerten Rotorblattes 30 erfolgt dort durch einen Zahnriementrieb, bei dem ein Zahnriemen 31 einerseits in eine mit einem Motor M verbundene Antriebsscheibe 32 kämmend eingreift und andererseits in einen am Schaft 30a des Rotorblattes 30 angreift, üblicherweise an einer hier nicht im Detail dargestellten verzahnten Spannplatte. Die Antriebsscheibe ist mit einer zum Zahnriemen komplementären Verzahnung versehen. Der Zahnriemen umschlingt die Antriebsscheibe um einen Teil des jeweiligen Außenumfangs und ist an seinen Enden mit jeweils einer Klemmung 33 auf dem Rotorschaft befestigt. Die Zugkräfte und das übertragbare Drehmoment einer solchen Verstelleinrichtung mit Zahnriemen sind begrenzt und wesentlich niedriger als die bei der erfindungsgemäßen Ausbildung übertragbaren Kräfte. Der Zahnriemen 31 umläuft mit seinem Rücken auch eine als Rückenrolle ausgebildete Umlenkrolle 34, die gleichzeitig als Spannrolle dient. Somit bilden hier Zahnriemen 31, Antriebsscheibe 32, Umlenkrolle 34 und der Schaft mit Spannplatte diesen Zahnriementrieb aus dem Stand der Technik, mit dem das Rotorblatt um seine Längsachse gedreht/verstellt wird.

### Bezugszeichenliste

### (Teil der Beschreibung)

- 1: Windkraftanlage
- 2: Turm der Windkraftanlage
- 3: Generatorgehäuse
- 4: Verstellbares Rotorblatt
- 4a: Schaft des Rotorblattes
- 5: Verstellbares Rotorblatt
- 6: Verstellbares Rotorblatt
- 7: Nabe
- 8: Rotorblattlängsachse
- 9: Zugriemen
- 9a, 9b: Teil des Zugriementrums
- 10: Antriebsscheibe
- 11: Umschlingung Antriebsscheibe/ Teilumfang
- 12: Umschlingung Rotorschaft/ Teilumfang
- 13: Wind, Windrichtung
- 14: Flaschenzugrolle
- 15: Flaschenzugrolle
- 16: Abstandshalter/Gleitschiene
- 17: Umlenk- und Spannrolle
- 18: Umlenk- und Spannrolle

- 30: Rotorblatt
- 30a: Schaft des Rotorblattes
- 31: Zahnriemen
- 32: Antriebsscheibe
- 33: Klemmung
- 34: Rückenrolle / Umlenkrolle

## Patentansprüche

1. Einrichtung zur Rotorblattverstellung an einer Windkraftanlage (1), bei der die Verstellung eines drehbar gelagerten Rotorblattes (4, 5, 6) über einen Zugriementrieb erfolgt, bei dem ein Zugriemen (9) mindestens eine mit einem Antriebsmotor verbundene Antriebsscheibe (10) und den Fuß bzw. Schaft des Rotorblattes (4a) jeweils mindestens teilweise so umschlingt, dass ein zur Verstellung des Rotorblattes erforderliches Drehmoment vom Antriebsmotor auf den Schaft übertragbar ist, **dadurch gekennzeichnet, dass** der Zugriemen (9) zwischen dem Umschlingungsbereich (11) an der Antriebsscheibe (10) und dem Umschlingungsbereich (12) am Fuß bzw. Schaft des Rotorblattes (4a) in Form eines Flaschenzugs über Flaschenzugsrollen (14, 15) geführt ist, wobei der Zugriemen (9) mit seiner einen Seite an der Antriebsscheibe (10) anliegt und letztere umschlingt und mit seiner anderen, gegenüberliegenden Seite am Fuß bzw. Schaft des Rotorblattes anliegt und letzteres über einen Teilbereich bzw. Umschlingungsbereich (12) umschlingt.

2. Einrichtung nach Anspruch 1, bei der die Flaschenzugsrollen (14, 15) am Fuß bzw. Schaft des Rotorblattes (4a) gelagert ist.

3. Einrichtung nach Anspruch 1 oder 2, bei der der Zugriemen (9) mit einer einseitigen oder beidseitigen Zahnung versehen ist.

4. Einrichtung nach Anspruch 1 oder 2, bei der der Zugriemen (9) als Flachriemen oder als mindestens einseitig profilierter Flachriemen ausgebildet ist, der die Antriebsscheibe (10) und den Fuß bzw. Schaft (4a) des Rotorblattes reibschlüssig umschlingt.

5. Einrichtung nach einem der Ansprüche 1 bis 4, bei der Zugriemen (9) als Endlosriemen ausgebildet ist.

6. Einrichtung nach einem der Ansprüche 1 bis 5, bei der die eine Flaschenzugsrolle (14, 15) umlaufenden im Flaschenzug gegenläufigen Teile (9a, 9b) des Zugriemens durch Abstandshalter (16) getrennt werden, vorzugweise durch Gleitschienen oder Rollen, an denen die gegenüber liegenden Seiten (9a, 9b) des Zugriemens gegenläufig bewegbar anliegen.

7. Einrichtung nach Anspruch 6, bei der der Zugriementrieb Umlenk- und/oder Spannrollen (17, 18) aufweist, insbesondere Umlenkrollen, mit denen der Zugriemen an die Abstandshalter angelegt ist.

8. Einrichtung nach einem der Ansprüche 1 bis 7, bei der der Zugriemen mindestens einseitig mit einer gleitfähigen Auflage versehen ist.

9. Einrichtung nach Anspruch 8, bei der der Zugriemen einseitig eine Gewebelage als gleitfähige Auflage aufweist, vorzugsweise eine mit einer Polyethylenfolie beschichtete Gewebelage.

10. Einrichtung nach einem der Ansprüche 1 bis 9, bei der der Zugriemen (9) vorzugsweise in einem mittleren Bereich der Umschlingung am Fuß bzw. Schaft des Rotorblattes form- und/oder reibschlüssig befestigt ist.

## Claims

1. Device for rotor blade adjustment in a wind power plant (1), in the case of which device the adjustment of a rotatably mounted rotor blade (4, 5, 6) takes place via a flexible belt drive, in the case of which a flexible belt (9) wraps around at least one drive pulley (10), which is connected to a drive motor, and the root or shank of the rotor blade (4a) in each case at least partially in such a way that a torque which is required for the adjustment of the rotor blade can be transmitted from the drive motor to the shank, **characterized in that** the flexible belt (9) is guided in the form of a pulley block over pulley block rollers (14, 15) between the wraparound region (11) on the drive pulley (10) and the wraparound region (12) on the root or shank of the rotor blade (4a), the flexible belt (9) bearing with its one side against the drive pulley (10) and wrapping around the latter, and bearing with its other, opposite side against the root or shank of the rotor blade and wrapping around the latter over a part region or wraparound region (12).

2. Device according to Claim 1, in the case of which the pulley block rollers (14, 15) are mounted on the root or shank of the rotor blade (4a).

3. Device according to Claim 1 or 2, in the case of which the flexible belt (9) is provided with a single-sided or double-sided toothing system.

4. Device according to Claim 1 or 2, in the case of which the flexible belt (9) is configured as a flat belt or as a flat belt which is profiled at least on one side and wraps around the drive pulley (10) and the root or shank (4a) of the rotor blade in a frictionally locking manner.

5. Device according to one of Claims 1 to 4, in the case of which the flexible belt (9) is configured as an endless belt.

6. Device according to one of Claims 1 to 5, in the case of which those parts (9a, 9b) of the flexible belt which run around the pulley block roller (14, 15) in opposite directions in the pulley block are separated by way of spacer elements (16), preferably by way of sliding rails or rollers, against which the opposite sides (9a, 9b) of the flexible belt bear such that they can be moved in opposite directions.

7. Device according to Claim 6, in the case of which the flexible belt drive has deflection and/or tensioning rollers (17, 18), in particular deflection rollers, by way of which the flexible belt is set against the spacer elements.

8. Device according to one of Claims 1 to 7, in the case of which the flexible belt is provided at least on one side with a pad with sliding properties.

9. Device according to Claim 8, in the case of which the flexible belt has a woven fabric layer on one side as pad with sliding properties, preferably a woven fabric layer which is coated with a polyethylene film.

10. Device according to one of Claims 1 to 9, in the case of which the flexible belt (9) is preferably fastened in a positively locking and/or frictionally locking manner to the root or shank of the rotor blade in a middle region of the wraparound area.

## Revendications

1. Dispositif de réglage de pale de rotor d'une éolienne (1), dispositif dans lequel le réglage d'une pale de rotor (4, 5, 6) montée à rotation est effectué par le biais d'un entraînement par courroie de traction, dans lequel une courroie de traction (9) s'enroulant au moins partiellement autour d'au moins une poulie d'entraînement (10) reliée à un moteur d'entraînement et du pied ou de la tige de la pale de rotor (4a) de sorte qu'un couple nécessaire au réglage de la pale de rotor puisse être transféré du moteur d'entraînement à la tige, **caractérisé en ce que** la courroie de traction (9) est guidée entre la zone d'enroulement (11) de la poulie d'entraînement (10) et la zone d'enroulement (12) du pied ou de la tige de la pale de rotor (4a) sous la forme d'un moule par le biais de rouleau de moufle (14, 15), la courroie de traction (9) venant en appui par un de ses côtés sur la poulie d'entraînement (10) et s'enroulant autour de cette dernière et venant en appui de l'autre côté opposé du pied ou de la tige de la pale de rotor et s'enroulant autour de cette dernière sur une zone partielle ou une zone d'enroulement (12).

2. Dispositif selon la revendication 1, dans lequel les rouleaux de moufle (14, 15) sont montés sur le pied ou la tige de la pale de rotor (4a).

3. Dispositif selon la revendication 1 ou 2, dans lequel la courroie de traction (9) est munie d'une denture unilatérale ou bilatérale.

4. Dispositif selon la revendication 1 ou 2, dans lequel la courroie de traction (9) est réalisée sous la forme d'une courroie plate ou d'une courroie plate profilée sur au moins un côté qui s'enroule par friction autour de la poulie d'entraînement (10) et du pied ou de la tige (4a) de la pale de rotor.

5. Dispositif selon l'une des revendications 1 à 4, dans lequel la courroie de traction (9) est conçue comme une courroie sans fin.

6. Dispositif selon l'une des revendications 1 à 5, dans lequel les parties (9a, 9b) de la courroie de traction qui circulent dans des sens opposés dans le moufle et autour du rouleau de courroie de traction (14, 15) sont séparées par des moyens d'espacement (16), de préférence par des glissières ou des rouleaux, au niveau desquels des côtés opposés (9a, 9b) de la courroie de traction viennent en appui de manière mobile dans des sens opposés.

7. Dispositif selon la revendication 6, dans lequel l'entraînement par courroie comporte des rouleaux de déviation et/ou de tension (17, 18), en particulier des rouleaux de déviation, avec lesquels la courroie de traction est appliquée sur les moyens d'espacement.

8. Dispositif selon l'une des revendications 1 à 7, dans lequel la courroie de traction est munie au moins d'un côté d'un appui coulissant.

9. Dispositif selon la revendication 8, dans lequel la courroie de traction comporte sur un côté une couche de tissu servant d'appui coulissant, de préférence une couche de tissu revêtue d'un film de polyéthylène.

10. Dispositif selon l'une des revendications 1 à 9, dans lequel la courroie de traction (9) est fixée par friction ou par complémentarité de formes au niveau du pied ou de la tige de la pale de rotor de préférence dans une région centrale de l'enroulement.
